# EUROPEAN PATENT SPECIFICATION

(11) **EP 2 975 141 B1**
(45) Date of publication and mention of the grant of the patent: **10.10.2018**
(21) Application number: 14773683.9
(22) Date of filing: 27.03.2014
(51) Int. Cl.: C22B 7/00, C22B 13/00, C22B 3/10, C22B 3/46

(54) **HYDROMETALLURGICAL PROCESS FOR RECOVERING LEAD FROM LEAD SULFATE**
HYDROMETALLURGISCHES VERFAHREN ZUR GEWINNUNG VON BLEI AUS BLEISULFAT
PROCÉDÉ HYDROMÉTALLURGIQUE PERMETTANT DE RÉCUPÉRER LE PLOMB DU SULFATE DE PLOMB

(30) Priority: 27.03.2013 CN 201310100691
(43) Date of publication of application: 20.01.2016
(73) Proprietor: Yunnan Xiangyunfeilong Resources Recycling Technology Co., Ltd, Yunnan 672100 (CN)
(72) Inventor: SHU, Yuzhang, Yunnan 672100 (CN); TIAN, Xilin, Yunnan 672100 (CN)
(74) Representative: Sun, Yiming
(86) International application number: PCT/CN2014/074192
(87) International publication number: WO 2014/154160

(56) References cited:
- EP-A1- 0 551 155
- WO-A1-99/18248
- CN-A- 101 613 803
- CN-A- 102 061 382
- CN-A- 102 399 984
- CN-A- 103 194 615
- US-A- 2 142 274
- US-A- 4 372 782
- TONG, ZHIQUAN.: 'Lead Recovery From Residue Containing Lead Sulphate by Means of Metal Chloride Leaching-Ferrous Powder Replacing' NATURAL SCIENCE JOURNAL OF XIANGTAN UNIVERSITY vol. 13, no. 3, 30 September 1991, pages 70 - 76, XP 055252403

## Description

### Technical Field

The present invention belongs to hydrometallurgical technology, which relates to the technology of lead production using the wholly hydrometallurgical technology to lead sulfate(PbSO₄) residue accompanied the process of zinc smelting through hydrometallurgy or lead mud of lead storage battery.

### Technical Background

The raw materials of Hydrometallurgical zinc smelting contain 1-4% lead, and when zinc calcine is adopted the method of leaching the needle ironstone with peracid to precipitate iron or the method of ferroalumen to precipitate iron, during the process of leaching of iron, the lead is accumulated in the high leaching slag, and the morphology of the lead is almost PbSO₄. When it is adopted the fire-method to deal with the leaching slag, the lead and zinc both are volatilized into the fume, after further dealing with the fume to leach the zinc, the lead is accumulated in the leached slag, and all its form is PbSO₄.

And the other materials, for example, the zinc oxide treated after the deoxidation and volatilization using fire-method of the fume of iron factory or copper smelting factory, also contain zinc, and after further dealing with leached zinc, the lead is also accumulated in the leaching slag, and its form is also PbSO₄.

The lead content of above-mentioned materials containing the PbSO₄ residue is 10-40% commonly. In order to recycle lead from the above-mentioned materials, it is generally adopted the fire-method to smelt, and the energy consumption is high, the fume produced during the process of metallurgy is accompanied at the same time with the air-phase pollutions of lead dust, lead fume, SO₂ fume and Dioxin, etc.

When recycling of old lead storage battery, the lead storage battery is disassembled and crushed, and the main contents of the lead mud seperated out are PbSO₄ and PbO, and now the fire-method of metallurgy is mainly used in treating lead mud and recycling lead various countries in the world, and it still exists the problems of high energy consumption and air pollution.

The domestic and overseas scholars are also study the hydrometallurgical treating technology of lead mud of lead storage battery, and they generally adopted the conversion method to convert PbSO₄, PbO to PbCO₃ or PbCl₂. The carbonate conversion method is used to convert PbSO₄ and sodium carbonate or ammonium carbonate to desulfurate, and convert PbSO₄ to PbCO₃ at the same time, and using borofluoric acid or silicofluoric acid to dissolve lead corbonate and using lead borofluoric acid or lead silicofluoric acid to electrolyze and produce lead. And these methods all exist the problem of complicated lead electrolysis and difficulty. Thus, the large-scale production is not existed yet so far.

U.S. Patent No. US2142274A disclosed a method for manufacturing lead containing leaching lead sulphate in sodium, calcium chloride solution precipitating lead oxychloride and cementation of oxychloride with iron. But U.S. Patent No. US2142274A didn't disclose an easily controllable process for treating spent lead batteries.

In the world, under the increasing environment protection requirement and increasing pressure on the environment, Hydrometallurgical treating of PbSO₄ material is one of the hotspots of the field of metallurgy and environment protection in the current world, but there still exists a variety of different problems, and the scale production is not achieved.

### Summary of Invention

The aim of the present invention is to provide a technology of lead sulfate hydrometallurgical lead smelting, using the lead sulfate slag (mud) as the raw material to produce the metal lead directly, having the features of low energy consumption, low cost and easy popularization and application, and eliminate utterly the fume pollution of lead fume, lead dust and SO₂ etc.

The technical solution adopted by the present invention to achieve the aim of the invention is as follows: use CaCl₂ + NaCl as leaching solvent, leach the high leaching slag containing lead sulfate of hydrometallurgical zinc smelting, lead slag of the zinc oxide containing lead after lead leaching or the lead mud of the lead acid storage battery after being disassembled, use zinc to displace lead in the leached solution, recycle zinc in the displaced solution, the recycled zinc is returned back to the process of replacing of lead, the solution containing CaCl₂ + NaCl after zinc discycling is recycled to the process of leaching of chlorine salt of lead sulfate, wherein, ①molar ratio of Ca²⁺≥mole ratio of SO₄²⁻ in the material; ② the leachate ratio of NaCl and CaCl₂ should be adjusted according to real-time monitoring data in the operation to ensure the solution after leached to contain 3 ∼ 4g/L Ca²⁺, 10 ∼ 30g/L Pb²⁺, the Cl⁻ concentration in the leaching solution ≥ 150g / L; ③two kinds of schemes for zinc recycling, i.e. a. use P204 as extractant after displacement, passing the series steps of saponification of extractant→extraction of zinc → washing →reverse extraction → electrolysing of zinc, b. use Ca (OH)₂ to neutralize preciitated zinc, then go through four steps of Zn(OH)₂ dissolving, zinc extraction, reverse extraction and zinc electrolysis.

The temperature of the leachate is controlled between 18°C ∼ 90°C, and the pH of leachate equals to 4 ∼ 5; the leached solution should be cleased by sponge lead, remove the trace impurity of Ag, Cu, Bi in the solution; the zinc used in displacement is metal zinc piece, zinc powder, zinc particle, zinc ball, and the zinc piece precipitated from electrolytic zinc is the premium, and the temperature of displacement is 18°C ∼ 90°C, the used quantity of displaced zinc is 105 ∼ 110% of the theoretical used quantity.

The several important steps of the invention will be described in detail as following.

### 1. leaching

The leaching solvent adopted in the present invention is CaCl₂ + NaCl, and the leaching process is reacted as follows:

PbSO₄ + CaCl₂ + 2H₂O = CaSO₄•2H₂O↓+ PbCl₂ ...... (1)

The ratio of NaCl and CaCl₂ can be adjusted according to requirements. CaCl₂ has two kinds of function: one is making the above-mentioned reactions proceed utterly, and the molar ratio of Ca²⁺≥the molar ratio of SO₄²⁻ in the material, and make all SO₄²⁻ in the material convert to CaSO₄•2H₂O sediment which is more stable than lead sulfate during the leaching, and make the SO₄²⁻ in the solution reduce to the least, so as to be beneficial to the following treatment of leaching solution. The other function is to increase the solubility of PbCl₂ in the solution during reaction. The major effect of NaCl is to provide enough Cl⁻ to dissolve the produced PbCl₂. The solubility of PbCl₂ in the solution is related with concentration of Cl⁻ and concentration of CaCl₂ , and temperature of the solution. Followed by the rising of concentration of Cl⁻, the content of CaCl₂ is rising, and the temperature rising, the solubility of PbCl₂ is rising. In order to make reaction of PbSO₄ can conduct utterly and quickly, the leachate contains Ca²⁺≥3 ∼ 4g/L ; in order to achieve the concentration of Pb²⁺ to reach the required concentration 20g/L, the concentration of Cl⁻ in the solution is ≥150g/L; the temperature is selected by the contents of Cl⁻ and CaCl₂, when the concentration of Cl⁻ and CaCl₂ is high, it can be the suitable low temperature; when the concentration of Cl⁻ and CaCl₂ is low, it must increase the temperature. The ratio of the solutions is different, and the temperature is between 18°C ∼ 90°C. The liquid-solid ratio of the leachate is determined by the content of Pb, and it is controlled that the leachate contains Pb²⁺ 10 ∼ 30g/L, and the leaching condition is more flexible.

Leaching is proceeded in the container with stirring, the leaching ratio of Pb is 95%, the pH of leaching solution is 4 ∼ 5. When the lead residue of zinc smelting is treated, the lead residue itself is acid, it is not needed to add acid additionally. It is needed to add little quantity of hydrochloric acid when the lead mud of storage battery is treated, and the pH of final end of leaching is adjusted by lime milk to 4 ∼ 5.

### 2. Purification and Removing Impurity of Solution and Lead Displacement

After liquid-solid separation of leached mine slurry, the leachate is purified, and the purification is proceeded in the stirring groove, add 1g/L sponge lead into the groove, remove the trace impurity of Ag, Cu and Bi etc. in the solution, use zinc to displace lead in the solution, and the displacement reaction is as follows:

PbCl₂ + Zn = Pb + ZnCl₂ ...... (2)

Use metal zinc to displace lead, and the metal zinc can be made various physical form, es. Zinc power, zinc piece, zinc particle and zinc ball are all usable. The zinc piece separated out through zinc electrolysis is premium, no requirement of additional process.

The displacement is proceeded in the displacement reactor, and chlorine salt leachate and zinc are added into the displacement reactor, the displacement reaction proceeds very quickly, and the staying time of the solution in the displacement reactor is≥5 min, the PbCl₂ passing through the displacement solution is displaced to metal lead. It doesn't need special heating up or cooling down when displacement of lead, and need the natural temperature of leachate, es. 18°C ∼ 90°C. The theoretical quantity of zinc as it is used for displacing is 0.3165t/t lead, and the actual quantity is 105 ∼ 110% of the theoretical quantity.

The process of the displacement, and the displaced solution contains Pb < 50mg/L.

Displaced mental is pick out, briquetting after rinsing, covered with NaOH in an amount of 10-20% of block mass, melt under 500°C to get the metal lead, and the lead content > 99%.

Lead grade impurity content is determined by the degree of purification of the solution.

### Recycling of Zinc

There are two schemes for recycling of zinc.

The first scheme is extracting of zinc directly from the displaced solution→reverse extraction→electrolysis, and the electrolytic zinc piece is used for displacing lead. The raffinate is used back to leach lead sulfate, recycling used.

The second scheme is neutralizing sedimental lead, the solution after sedimentation is back to used for leaching of lead sulfate, recycling used. The sedimental Zn(OH)₂ is dissolved by sulfuric acid (raffinate) →extracting of zinc→reverse extracting of zinc→electrolyzing of zinc, and the zinc piece is used to displace lead.

### The first scheme of recycling zinc

The first scheme of recycling zinc is detailed descripted as follows: extracting of zinc directly from the displaced solution, the extractant is P204 es. diisooctyl phosphate vinegar. The process of recycling zinc is saponification of extractant→extracting of zinc→rinsing and removing impurities→reverse extracting→electrolyzing of zinc. The process is as follows:
(1) Saponification: use Ca(OH)₂ to saponify P₂₀₄, the saponification solution contains Ca(OH)₂, P₂₀₄ is mixed with 260^{#} solvent oil as the ratio of volume of P₂₀₄ : kerosene=20 ∼ 30%, the prepared P₂₀₄ and saponifier are mixed evenly for 1 ∼ 2 minutes, stay for precipitating and separation of phase, the saponification reaction is proceeded as following chemical reaction:

   2HR_{(organic phase)} + Ca(OH)_{2 (water phase)} = CaR_{2(organic phase)} + 2H₂O) ...... (3)

   The saponified extractant contains about 5 ∼ 12g/L Ca, which used to extract zinc.
(2) Extracting of zinc: the saponified P204 is mixed with displaced solution, clarified and separating of phase, the time of mixing is 1 ∼ 5 min. The extraction reaction is

   CaR_{2(organic phase)} + ZnCl_{2(water phase)} = ZnR_{2(organic phase)} + CaCl_{2(water phase)} ...... (4)

   Using 3-5 grade countercurrent extraction, the extraction temperature is 20 ∼ 40°C, Ca is transferred into the raffinate to form CaCl₂.
   Raffinate is back to used to leaching of PbSO₄ slag, recycling used.
   Due to the organic phase carries a small amount of raffinate unevitably as the separation of water phase and organic phase, and raffinate is removed by washing by water.
(3) Reverse extraction of zinc: the organic phase is reverse extracted by zinc electrolyzing waste liquid after being extraction of zinc. The zinc electrolyzing waste liquid contains H₂SO₄ 150 ∼ 180g/L, and Zn 40 ∼ 50g/L,and mixed with organic phase loaded with zinc, put zinc into the reverse extraction solution, the ratio of reverse phase is controlled according to the quantity of 90 ∼ 120g/L Zn after reverse extraction, and reverse extraction can be proceed according to first grade or second grade countercurrent, and organic phase containing Zn < 0.5g/L as the standard. The reaction of reverse extracting of zinc is:

   ZnR_{2(organic phase)} + H₂SO_{4 (water phase)} = ZnSO_{4 (water phase)} + 2HR _{(organic phase)} ...... (5)

The time of mixing of reverse extraction is 0.5 ∼ 10 min, and the temperature of reverse extraction is 20 ∼ 40°C, the organic phase is back to be saponified after reverse extraction, recycling used.

Removing oil from reverse extraction solution: the reverse extraction solution generally contains a small amount of extractant, generally about 10PPm. It will effect electrolysis of zinc as P204 > 1PPm, resulting in the efficiency of currency reduced. Using air-flotation-active carbon to adsorb, P204 can be reduced less than 1PPm, electrolysis is proceeded, and the electrolysis process is as the same as the routine electrolysis of zinc.

The reaction of electrolysis of zinc is:

ZnSO₄ + H₂O + 2e = Zn + H₂SO₄ + 1/2O₂ ...... (6)

The recycled H₂SO₄ comes back to reverse extract zinc, recycling used, and the separated zinc piece is used to displace lead. When the PbSO₄ slag after zinc separated is treated, the additional separated zinc can be recycled incidentally, and the redundant zinc can be sold as product.

### The second scheme of recycling zinc

The second scheme of recycling zinc includes the five steps of neutralizing sedimental zinc, dissolving Zn(OH)₂, extracting of zinc, reverse extraction and electrolysis.
(1) neutralizing sedimental zinc: the displace solution contains NaCl +CaCl₂ + ZnCl₂, use Ca (OH)₂ to neutralize the sedimental zinc, and add Ca(OH)₂ into the stirring groove, pH value rises up to 7 ∼ 9, so as to precipitate sedimental zinc, and the reaction of neutralizing zinc is:

   ZnCl₂ + Ca(OH)₂ = Zn(OH)₂↓ + CaCl₂ ...... (7)

   After solid-liquid separation, the sedimental zinc comes back to leach PbSO₄, and recycling used. The separated Zn(OH)₂ sediment is washed by water to remove attached mother solution, and the sediment contains Zn 55 ∼ 64% (calculated by dry weight).
(2) Dissolving of Zn(OH)₂ : use dilute sulphuric acid(raffinate) to dissolve Zn(OH)₂, controlling the leachate contain 20 ∼ 30g/L Zn, the reaction is proceeded in the stirring groove, normal temperature. The extraction of zinc is proceeded after dissolving of zinc and filtration of zinc. The reaction of dissolving zinc is:

   Zn(OH)₂↓ + = ZnSO₄ + 2H₂O ...... (8).
(3) Extraction of zinc: use P204, the 260^{#} solvent kerosene is diluent, formulating the organic phase containing 20 ∼ 40% of P204, stirred mixing the organic phase and leachate and make zinc into the organic phase. The extraction reaction is:

   3HR_{(organic phase)} + ZnSO_{4(water phase)} = ZnR₂•HR_{(organic phase)} + H₂SO_{4(water phase)} ...... (9)

   The raffinate comes back to dissolve Zn(OH)₂, and recycling used. The extraction grade is 3 ∼ 4 grade and countercurrent proceeding. The ratio of organic phase to water phase = 1/2 ∼ 2/1, and the extraction time is 0.5 ∼ 5 mins, the extraction temperature is 20 ∼ 30°C.
(4) Extracting of zinc: the organic phase being extracted contains 10 ∼ 15g/L, use waste fluid of electrolysis zinc to reverse extract, and the process of reverse extraction is as same as scheme 1. After reverse extraction, the organic phase comes back to extract zinc, recycling used.
(5) Removing oil from the reverse extraction fluid and electrolyzing zinc: the process is as same as scheme 1, and the electrolyzing waster fluid comes back to reverse extract zinc, recycling used, and the separated zinc piece is used to displace lead chloride.

### The features of the present invention

The present invention is the hydrometallurgical technology of lead production of using PbSO₄ slag as the raw material. It is used mature leaching technology of chlorine salt to produce chlorine salt solution of PbCl₂, and at the same time, transform the sulfate to harmless plaster. PbCl₂ is reduced to metal lead with the help of zinc, and then use zinc solution to extract and electrolyze zinc from displaced solution, so ad to achieve the recycling of zinc and zinc comes back to displace lead. The calcium needed in the process of leaching is supplied during the process of the recycling of zinc. And it has the following features:
(1) The reaction of first scheme of recycling zinc is (1)+(2)+(3)+(4)+(5)+(6), and the whole reaction of the technology is:

   PbSO₄ + Ca(OH)₂ + H₂O + 2e = Pb + CaSO₄•2H₂O↓ + 1/2O₂ ...... (10)

   The reaction of second scheme of recycling zinc is (1)+(2)+(3)+(7)+(8)+(9)+(5)+(6), and the whole reaction is still (10).
   Ca(OH)₂ and direct currency are consumed during the process, and the other processes are all middle process of conversion.
(2)The leaching of PbSO₄ depends on the reaction of CaCl₂ and PbSO₄ to transform PbSO₄ to PbCl₂ and CaSO₄•2H₂O, and the reaction proceeds utterly and quickly, the total quantity of Cl⁻ is controlled by the quantity of PbCl₂ needed to be dissolved. And the reaction produces the environment-harmless CaSO₄•2H₂O es. Plaster.
(3) The material needed to produce CaSO₄•2H₂O is cheap and easy-to-get plaster, the supplement of plaster is finished during the process of recycling of zinc. The scheme 1 is the process of supplement of needed calcium using Ca(OH)₂ during the process of saponification as zinc extraction and zinc extraction, and finished through the process of zinc extraction. The scheme 2 is supplement as the form of Ca(OH)₂ as supplement after displacement of lead and neutralizing of sedimental zinc.
(4) Using zinc to displace lead, PbCl₂ is transformed to lead with the help of displacement of zinc. The zinc using for displacement is recycled and used by the recycling technology of zinc. Using the low-cost, high-recycling zinc extraction→reverse extraction→electrolysis, so as to achieve recycling and usage, and can recycle the partly dissolved zinc in the recycled material additionally. It is need 3.16 tons to displace 1 ton lead according to theoretic calculation, and the actual consumption is 105 ∼ 110% of theoretic quantity, and use mature, dependable eletrolysis technology of zinc recycling to displace complex and expensive lead electrodeposition, so as to make the hydrometallurgical technology of lead smelting become large-scale industrialization.
(5) All the solution and technology of the present invention are closed circle. CaCl₂ is recycled to leach PbSO₄ after displacing of Pb followed by extracting of zinc. The second scheme is neutralizing the sedimental zinc after displacing of Pb, CaCl₂ is recycled and then comes back to leach PbSO₄, and during the process of sediment of zinc-extraction-reverse extraction and electrodeposition, the zinc extraction residue solution and Zn(OH)₂ solution form close circuit; During the process of extraction-reverse extraction of zinc-electrodeposition, the waste electrolytic solution and reverse extraction of zinc form closed circle; during the process of extraction, the organic phase forms extraction-reverse extraction circle. No waste water.
(6) The present invention has significant advantage of environmental friend, and the whole process is whole hydrometallurgical process, and the sulfate transform to safe and harmless plaster (CaSO₄•2H₂O), no SO₂ fume, no lead dust, no lead fume.
(7) The present invention is to produce lead through PbSO₄ slag, and the cost is low, the consumed material during the process is Ca(OH)₂ and direct currency. Ca(OH)₂ is low-price and easy-to-get lime, and the direct currency is electricity consumption of zinc eletrolysis, and according to the present invention, it is needed zinc piece of 0.3165 tons zinc to displace 1 ton zinc theoretically according to the present invention, and the actual consumption is 0.34 ∼ 0.35 ton. According to the DC electricity consumption of electrolysis of zinc, equal to 1020 ∼ 1050kwh/ton per 1 ton lead. During the process of zinc recycling, according to the recently price level, the cost is 3000 ∼ 3200 yuan/ton, separated to each ton of lead, the cost is lead 1050 ∼ 1120 yuan/ton lead, the production cost is largely lower than other technology.

The present invention has the advantages of environmentally friend, low-cost, easy-to-control, and easy to achieve the large-scale production.

### Description of Drawings

Fig. 1 is the brief diagram of technology process of the present invention.
Fig. 2 is the brief diagram of technology process of first scheme combined with zinc recycling of the present invention.
Fig. 3 is the brief diagram of technology process of second scheme combined with zinc recycling of the present invention.

### The detailed Embodiments

### Example 1: leaching

Oxidation of zinc in volatilizezing kiln of certain enterprise, leaching the lead sulfate slag after recycling of zinc and indium. The slag contains 21.89% of lead, and all are lead sulfate, and contains 3.5% of Zn, contains 10.2% of S.

The leachate is chlorine salt solution, NaCl 280g/L , Ca²⁺ 13g/L. The leaching condition is: adding 5L leachate into 500g(dry weight) slag, leaching under the condition of stirring, and ratio of liquid to solid is 10:1, and the temperature is 80°C , leaching time is 1.5 hrs , pH of leaching end is 4.5.

The leaching slag contains 0.9% of Pb, the ratio of leaching slag is 96% , and the leachate contains 21.1 g/L of Pb.

### Example 2: leaching

Certain enterprise uses peracid to leach slag of lead and silver, which contains 15.54% of Pb(dry base), takes 588g of sample, adding 5L leachate contains Ca²⁺ 14g/L, NaCl 260g/L, and stir leachate for 1.5hrs under 80°C. The leaching slag after being dried is 451g, contains 1.36% of Pb, and leachate along with washing water is 5.32L, which contains 16.0g/L of Pb, and the leaching ratio of Pb is 93.15%.

### Example 3: leaching

Leaching of the lead paste from lead storage battery: at the recycling plant of certain lead smelting factory, the separated lead mud contains 76.04% of lead (dry base), take 100g lead paste and 2L leachate, and the leachate contains NaCl 320g/L, HCI 20g/L, and the leaching temperature is 85°C, the leaching time is 2 hrs, and the pH of leaching end is 2.0, add Ca(OH)₂ to adjust pH to 4.5. The filtered solution along with washing water is 2.1L, which contains Pb 34.8g/L and the ratio of leaching of lead is 96%.

### Example 4: leaching

Oxidation of zinc in volatilizezing kiln of certain enterprise, the lead slag leached out of zinc and indium by sulfate contains 21.2% of Pb, 7.14% of Zn, take 100g lead slag and the leaching temperature is 18°C, the ratio of liquid to solid is 10:1, and the leaching time is 5hrs. Filtrating and washing slag after leaching, leachate proceeds leaching according to different ratio of NaCl and CaCl₂.

The results of leaching as follows :

| No. | leachate | | Leached solution + washing water | | | Ratio of leaching | |
|---|---|---|---|---|---|---|---|
| | NaCl (g/L) | CaCl₂ (g/L) | volume (L) | Pb (g/L) | Zn (g/L) | Pb | Zn |
| 1 | 200 | 25 | 1.10 | 3.55 | 2.42 | 18.43 | 37.3 |
| 2 | 250 | 25 | 1.30 | 5.54 | 1.94 | 34.03 | 35.3 |
| 3 | 300 | 30 | 1.27 | 10.12 | 2.09 | 60.7 | 36.5 |
| 4 | 360 | 25 | 1.25 | 14.62 | 2.05 | 86.5 | 35.9 |
| 5 | 350 | 50 | 1.19 | 17.59 | 2.86 | 98.7 | 47.7 |

Under the condition of 18°C, the quantity of NaCl and CaCl₂ is rised, and the ratio of leaching is improved, and under the condition of No.5, the ratio of leaching is ideal.

### Example 5: Purification and Removing Impurities.

Chloridized leachate of PbCl₂, the components are as follows:

| Pb (g/L) | Zn (g/L) | Fe (mg/L) | Cu (mg/L) | As (mg/L) | Sb (mg/L) | Bi (mg/L) | Sn (mg/L) | Ca (g/L) |
|---|---|---|---|---|---|---|---|---|
| 21.86 | 7.74 | 10 | 80.79 | 1.0 | 2.05 | 1.79 | 6.37 | 5.71 |

Get 5L solution, under the condition of 50°C, add 2.5g zinc powder, stirring and reacting, after zinc is added, the sponge lead is displaced very quickly, and keep stirring, the sponge lead is formed powder through stirring, and then displace impurities, filter after reacting for 1hr, and the components of solution are as follows:

| Pb (g/L) | Zn (g/L) | Fe (mg/L) | Cu (mg/L) | As (mg/L) | Sb (mg/L) | Bi (mg/L) | Sn (mg/L) | Ca (g/L) |
|---|---|---|---|---|---|---|---|---|
| 21.50 | 8.01 | 10 | 1.2 | 0.1 | 0.1 | 0.2 | 0.2 | 5.7 |

### Example 6: displacement of lead

The components of pre-displaced solution:

| g/L | Pb | Zn | Ca | pH |
|---|---|---|---|---|
| | 22.97 | 6.66 | 3.5 | 5.0 |

Get 5L solution, and then put into container, the temperature is 50°C, put 200g zinc piece, stir the solution quickly, the Pb content of the solution reduced to 0.02g/L after 5 mins. Take out the zinc piece and sponge lead, and the weight of residual zinc piece is 163g, the consumption of zinc piece is 47g, and the quantity of displaced lead is 114.75g by calculated. And the consumption of zinc piece is 0.3224g Zn/g Pb, which is 1.02 times of the theoretical consumption quantity.

The components of the displaced solution are:

| g/L | Pb | Zn | pH |
|---|---|---|---|
| | 0.02 | 14.1 | 5.0 |

### Example 7: displacing of lead

The components of chlorine salt of PbCl₂:

| g/L | Pb | Zn | Ca |
|---|---|---|---|
| | 12.72 | 3.94 | 4.30 |

Measure the leachate into the container, add 1000g zinc piece as stirring, and the solution continues to enter in and out, until the zinc piece is disappeared, the lead displaced forms to particle, get it and briquette, weight, then take the sample to analyze. The weight of the block is 3210g, which contains 95.71% of Pb,4.5% of water. The quantity of displaced lead is 3210×95.71%×95.5%, equal to 2934g, and the consumption quantity of Zn for displacing Pb is 0.3408 g Zn/g Pb, which is 108% of the theoretical quantity.

The briquetting block is coverd by 320g NaOH, and smelted under 500°C to obtain lead ingot. The lead ingot contains 99.8% of Pb, and the components of impurities are : 0.0069% of Zn, 0.0017% of Fe, 0.002% of Bi, 0.074% of Cu, 0.0078% of Sb, 252g/t of Ag, As < 0.01, Sn < 0.01, and the total quantity of impurities is 0.1196%.

### Example 8: Extracting and recycling of zinc from displaced solution

The extractant is industrial P204, and the diluent is 260_{#} kerosene, according to the volume ratio of 20% concentration, and the theoretical saturated capacity is Zn²⁺17.8g/L and Ca²⁺10.9g/L respectively.

Saponification of organic phase: add CaCl₂ into the saponified solution, and the solution contains Ca²⁺9.83g/L, mix 20% P204 solution with saponified solution according to the ratio of 1:1 for 4 mins to separate the phases, and the saponified solution contains Ca²⁺0.9g/L, pH4.5 ; and the organic phase contains Ca²⁺8.9g/L for extracting of zinc, add Ca(OH)₂ into the saponified solution so as to supple Ca²⁺ to about 10g/L, recycling used.

Extracting of zinc :

| Extractant g/L : | Zn | Ca | Cl⁻ |
|---|---|---|---|
| | 14.85 | 4.5 | 188 |
| Saponified organic phase g/L : | - | 9.16 | - |

The extracting is proceeded according to O/A=1:1.5, four grade of countercurrent, and the mixing time is 3 mins, and the time of separating phase is 1 min. When the balance is reached, get organic phase and water phase to analyze, and the organic phase contains Zn 14.66g/L, Ca 0.052g/L. Raffinate contains Ca 10.5g/L and Zn 4.2g/L ,come back to leaching of PbSO₄ slag.

Reverse extracting of zinc: the organic phase is reverse extracted by sulfate solution containing zinc after extracting of zinc, and the contents of zinc and acid in the reverse extractant is as same as zinc electrolyzing acid solution. In order to investigate the condition of Ca and Cl⁻ in the reversed solution, the reverse extraction solution is formulated with agents and distilled water. The contents of the solution before and after reverse extraction:

| | Zn (g/L) | H₂SO₄ | Ca (mg/L) | Cl⁻ (mg/L) |
|---|---|---|---|---|
| Pre-reverse extractant | 45 | 170 | - | - |
| Post-reverse rse extractant | 92 | 98 | 10.6 | 34.7 |

The content of the post-reverse extractant meets the requirement of zinc electrolysis.

The post-reverse extractant can be used for zinc eletrolysis after air floatation-active carbon adsorption. The zinc electrolysis produces zinc piece according to the technology of extracting zinc-electrolysing zinc of the enterprise.

### Example 9: Neutralizing the sedimental zinc and dissolving Ca(OH)₂ of the displaced solution of zinc

Neutralizing the sedimental zinc is the second scheme of zinc recycling.

| The components of displaced solution of zinc g/L : | Zn | Pb | Ca |
|---|---|---|---|
| | 14.1 | 0.02 | 3.2 |

Get 5L displaced solution, add Ca(OH)₂ powder, and proceed in the stirring groove, neutralizing to pH=7.0, and yield Zn(OH)₂ 119.1g, which contains Zn 59.2%, the solution of precipitated zinc contains Zn 5mg/L,and Ca²⁺12.3g/L, the solution of precipitated zinc can come back to leach PbSO₄.

Dissolving of Zn(OH)₂: In order to adapt the follow-up requirement of recycling zinc, use the zinc raffinate produced by zinc extraction of enterprise to dissolve.

| The components of raffinate g/L : | Zn | H₂SO₄ |
|---|---|---|
| | 7.5 | 21 |

The dissolved solution: Zn 21.5g/L, pH5.0

### Dissolution rate > 99%

The dissolved solution meets the requirement of extracting of zinc, and use the technology of extracting zinc-eletrolysing zinc to produce zinc piece.

## Claims

1. A technology of lead sulfate hydrometallurgical lead smelting, which **characterized in that**:
use CaCl₂ + NaCl as leaching solvent, leach the high leaching slag containing lead sulfate of hydrometallurgical zinc smelting, lead slag of the zinc oxide containing lead after lead leaching or the lead mud of the lead acid storage battery after being disassembled, use zinc to displace lead in the leached solution, recycle zinc in the displaced solution, the recycled zinc is returned back to the process of replacing of lead, the solution containing Cl- after zinc discycling is recycled to the process of leaching of chlorine salt of lead sulfate, wherein, ①molar ratio of Ca2+≥mole ratio of SO42- in the material; ② the leachate ratio of NaCl and CaCl₂ should be adjusted according to real-time monitoring data in the operation to ensure the solution after leached to contain 3∼4g/L Ca2+ , 10∼30g/L Pb2+, the Cl- concentration in the leaching solution ≥ 150g / L; ③two kinds of schemes for zinc recycling, i.e. a. use P204 as extractant after displacement, passing the series steps of saponification of extractant→extraction of zinc → washing →reverse extraction → electrolysing of zinc, b. use Ca (OH)2 to neutralize preciitated zinc, then go through four steps of Zn(OH)2 dissolving, zinc extraction, reverse extraction and zinc electrolysis.

2. The technology of lead sulfate hydrometallurgical lead smelting of claim 1, which **characterized in that**: the temperature of leachate is controlled within 18°C∼90°C and the pH of the leachate is 4-5; the leached solution should be purified by sponge lead so as to remove the trace impurities of Ag, Cu and Bi in the solution; the zinc needed for displacement is metal zinc piece, zinc powder, zinc particle, zinc ball, and the zinc piece separated from electrolysis is the premium, and the temperature of displacement is 18°C∼390°C, and the actual quantity of displacement of zinc is 105∼110% of the theoretical quantity.

3. The technology of lead sulfate hydrometallurgical lead smelting of claim 1, which **characterized in that**: the detailed first scheme a of recycling zinc is as follows: ①Saponification of extractant: use Ca(OH)2 to saponify P204, P204 is mixed with 260# solvent oil as the ratio of volume of P204: kerosene=20∼ 30%, the prepared P204 and saponifier are mixed evenly for 1∼2 minutes, stay for precipitating and separation of phase, the saponified solution is added into Ca(OH)2 and then recycling used; ②extracting of zinc: the saponified P204 is mixed with displaced solution, clarified and separating of phase, the time of mixing is 1∼5 min, using 3-5 grade countercurrent extraction, the extraction temperature is 20∼40°C, the residual raffinate in the organic phase after being extracted is removed by water washing. ③reverse extraction of zinc: the organic phase is reverse extracted by zinc electrolyzing waste liquid after being extraction of zinc, the zinc electrolyzing waste liquid contains 150 ∼180g/L, and Zn 40∼50g/L, and the ratio of reverse phase is controlled according to the quantity of 90∼120g/L Zn after reverse extraction, and reverse extraction can be proceed according to first grade or second grade countercurrent, and organic phase containing Zn<0.5g/L as the standard, and the mixing time of reverse extraction is 0.5∼10mins, and the temperature of reverse extraction is 20∼40°C, the organic phase after being reverse extracted returns back to the process of saponification for recycling, and the residual extractant in the reverse extractant is adsorpted by air flotation-active carbon. ④ eletrolysis of zinc: the ZnSO₄ solution obtained from reverse extraction is treated by electrolysis, and the recycled returns back to reverse extraction of zinc for recycling, and the separated zinc piece is used for the process of displacing of lead, and the excess recycling zinc piece is the zinc product after ingot casting of zinc piece.

4. The technology of lead sulfate hydrometallurgical lead smelting of claim 1, which **characterized in that**: the detailed second scheme b of recycling zinc is as follows: ①neutralizing sedimental zinc: use Ca (OH)2 to neutralize the sedimental zinc, and make pH value rises up to 7∼9, and the liquid-solid separation, and the solution after precipitation of zinc returns back to the process of leaching of PbSO4, the Zn(OH)2 sediment is separated out and then washed to remove the additional mother liquid by water; Zn(OH)2 can be done to product ZnO, and also can be used to produce electric zinc as the following process. ② dissolving of Zn(OH)2: use dilute sulphuric acid to dissolve Zn(OH)2 in the stirring groove, control the leachate contains Zn 20∼ 30g/L, extraction of zinc is proceeded after dissolving zinc followed by filtrating; ③extraction of zinc: using 260# solvent kerosene as diluent and then mixed with P204, preparation of organic phase contains 20∼40% of P204 by volume, and then the organic phase is stirring mixed with the solution of zinc dissolving, and the ratio of organic phase to water phase O/A = 1/2∼ 2/1, the time of extraction and mixing is 0.5∼5mins, and the temperature of extraction is 20∼30°C, proceeding 3-4 grade countercurrent extraction, and make zinc return back to organic phase, and raffinate returns back to Zn(OH)2 to dissolve and recycling used; ④ reverse extraction of zinc: as the same as the first scheme of the recycling of zinc; ⑤electrolysis of zinc: as the same as the first scheme of the recycling of zinc.

## Patentansprüche

1. Eine Technologie der hydrometallurgischen Bleischmelze von Bleisulfat, die **dadurch gekennzeichnet ist, dass**:
CaCl2+ und NaCl als Laugungslösungsmittel verwenden, die hochlaugenhaltige Schlacke, die Bleisulfat der hydrometallurgischen Zinkschmelze enthält, die Bleischlacke des zinkoxidhaltigen Bleis nach Bleilaugung oder den Bleischlamm des Bleisäureakkumulators nach dem Zerlegen mit Zink laugen, Zink verwenden, um Blei in der ausgelaugten Lösung zu verdrängen, Zink aus der verdrängte Lösung recycelt, das recycelte Zink zum Prozess des Ersetzens des Bleis zurückführen, die Lösung, die nach dem Ausziehen des Zinks Cl- enthält, in den Prozess des Auslaugens von Chlorsalz von Bleisulfat recycelt, wobei , ① Molverhältnis von Ca2+ ≥ Molverhältnis von SO42- in dem Material ist; ② das Sickerwasserverhältnis von NaCl und CaCl2 entsprechend den Echtzeitüberwachungsdaten dem Betrieb angepasst werden sollte, um sicherzustellen, dass die Lösung nach dem Auslaugen 3 ∼ 4 g/L Ca2+, 10 ∼ 30 g/L Pb2+, enthält, und die Konzentration von Cl- in der Laugelösung ≥ 150 g/L ist; ③ zwei Arten von Schemata für das Zinkrecycling, d.h. a. Verwenden von P204 als Extraktionsmittel nach dem Ersetzen, wobei die Serienschritte der Verseifung Extraktionsmittel → Extraktion des Zinks → Waschen → Rückextraktion → Elektrolysieren des Zinks durchlaufen werden, b. Verwenden von Ca(OH)2, um gefälltes Zink zu neutralisieren, anschließend Durchlaufen von vier Schritten der Auflösung von Zn(OH)2, Zinkextraktion, Rückextraktion und Zinkelektrolyse.

2. Eine Technologie der hydrometallurgischen Bleischmelze von Bleisulfat nach Anspruch 1, die **dadurch gekennzeichnet ist, dass**: die Temperatur des Sickerwassers innerhalb von 18°C ∼ 90°C geregelt wird und der pH-Wert des Sickerwassers 4-5 beträgt; die ausgelaugte Lösung durch Schwämmen gereinigt werden sollte, um Spuren von Ag, Cu und Bi in der Lösung zu entfernen; das Zink, das zur Verdrängung benötigt wird, metallisches Zinkstückgut, Zinkpulver, Zinkpartikel, Zinkball und das Zinkstück, das durch die Elektrolyse getrennt wird, von höchster Qualität ist und die Temperatur der Verdrängung 18°C ∼ 90°C ist und die tatsächliche Menge des verdrängten Zinks 105 ∼ 110% der theoretischen Menge ist.

3. Eine Technologie der hydrometallurgischen Bleischmelze von Bleisulfat nach Anspruch 1, die **dadurch gekennzeichnet ist, dass**: das detaillierte erste Schema a des Recycelns des Zinks wie folgt ist: ① Verseifung des Extraktionsmittels: Verwenden von Ca(OH)2 zum Verseifen von P204, P₂₀₄ wird mit 260#-Lösungsmittelöl in dem Volumenverhältnis von P204:Kerosin = 20 ∼ 30% gemischt, das vorbereitete P₂₀₄ und Verseifungsmittel werden für 1 ∼ 2 Minuten gleichmäßig gemischt, bleiben für die Ausfällung und Phasentrennung, die verseifte Lösung wird zum Ca(OH)2 hinzugefügt und anschließend Recycling verwendet; ② Extraktion des Zinks: die verseifte P204 wird mit verdrängten Lösung gemischt, geklärt und Phasentrennung unterzogen, die Mischzeit beträgt 1 ∼ 5 min, Verwenden von Gegenstromextraktion der Stufen 3-5, die Extraktionstemperatur ist 20 ∼ 40°C, das Rest-Raffinat in der organischen Phase wird nach dem Extrahieren durch Waschen mit Wasser entfernt. ③ Rückextraktion des Zinks: die organische Phase wird durch Zink-Elektrolyse von Abfallflüssigkeit nach Extraktion von Zink rückextrahiert, die Zinkelektrolyse-Abfallflüssigkeit enthält 150 ∼ 180 g/L H2SO4 und 40 ∼ 50 g/L Zn und das Verhältnis der Rückphase ist kontrolliert entsprechend der Menge von 90 ∼ 120 g/L Zn nach Rückextraktion, und Rückextraktion kann entsprechend dem Gegenstrom der ersten Stufe oder zweiten Stufe und organische Phase mit Zn <0.5 g/L als Standard durchgeführt werden, und die Mischzeit von der Rückextraktion beträgt 0.5 bis 10 Minuten, und die Temperatur der Rückextraktion beträgt 20 bis 40°C, die organische Phase kehrt nach der Rückextraktion zum Verseifungsverfahren für das Recycling zurück und das restliche Extraktionsmittel im Rückextraktionsmittel wird durch Aktivkohle durch Luftflotation adsorbiert. ④ Elektrolyse des Zinks: Die aus der Rückextraktion erhaltene ZnSO4 -Lösung wird durch Elektrolyse behandelt, und das recycelte H2SO4 kehrt zur Rückextraktion von Zink für Recycling zurück, und das abgeschiedene Zinkstück wird für den Prozess der Verdrängung von Blei verwendet und das überschüssige Zinkstück nach Recycling ist das Zinkprodukt nach dem Blockguss von Zinkstück.

4. Eine Technologie der hydrometallurgischen Bleischmelze von Bleisulfat nach Anspruch 1, die **dadurch gekennzeichnet ist, dass**: das detaillierte zweite Schema b des Recycelns des Zinks wie folgt ist: ① Neutralisieren von ausgefallenem Zink: Verwenden von Ca(OH)2, um das ausgefallene Zink zu neutralisieren und pH-Wert auf 7 ∼ 9 steigen zu lassen, und die Flüssig-Fest-Trennung, und die Lösung nach der Ausfällung von Zink kehrt zurück zum Prozess der Auslaugung von PbSO4, das Zn(OH)2-Sediment wird abgetrennt und dann gewaschen, um die zusätzliche Mutter-Flüssigkeit durch Wasser zu entfernen; Zn(OH)2 kann zum Produkt ZnO umgewandelt werden und kann auch zur Herstellung von elektrischem Zink durch das folgende Verfahren verwendet werden. ② Auflösen von Zn(OH)2: Verwenden verdünnter Schwefelsäure, um Zn(OH)2 in der Rührrille zu lösen, Kontrolle der Sickerwasser enthält 20 ∼ 30 g/L Zn, Extraktion von Zink erfolgt nach dem Auflösen des Zinks, gefolgt von Filtrieren; ③ Extraktion des Zinks: Verwenden von 260#-Lösungsmittel Kerosin als Verdünnungsmittel und dann Mischen mit P204, Herstellen der organischen Phase mit 20 ∼ 40 Vol.-% P204, und dann wird die organische Phase unter Rühren mit der Lösung zur Zinkauflösung gemischt, und das Verhältnis des organischen Phase zu Wasser-Phase O/A = 1/2 ∼ 2/1 ist, die Zeit der Extraktion und Vermischung 0.5 ∼ 5 Minuten ist, und die Temperatur der Extraktion 20∼30°C ist, Durchführen von Stufe 3-4 Gegenstromextraktion, und Zurückführen des Zinks in die organische Phase und Rückführen des Raffinats zu Zn(OH)2 zur Auflösung und Recycling; ④ Rückextraktion de Zinks: gleich dem ersten Schema des Recyclings des Zinks; ⑤ Elektrolyse des Zinks: gleich dem ersten Schema des Recyclings des Zinks.

## Revendications

1. Technologie de fusion de plomb hydrométallurgique de sulfate de plomb, qui est **caractérisée en ce que** :
utilisation de CaCl2 + NaCl en tant que solvant de lixiviation, lixiviation du laitier de lixiviation riche contenant du sulfate de plomb de la fusion de zinc hydrométallurgique, le laitier de plomb de l'oxyde de zinc contenant du plomb après lixiviation du plomb ou la boue de plomb de la batterie de stockage au plomb acide après avoir été démontée, utilisation de zinc pour déplacer le plomb dans la solution lixiviée, recyclage du zinc dans la solution déplacée, le zinc recyclé est renvoyé vers le procédé de remplacement du plomb, la solution contenant du Cl- après décyclage du zinc est recyclée vers le procédé de lixiviation de sel de chlore de sulfate de plomb, dans laquelle (1) rapport molaire de Ca2+ ≥ rapport molaire de SO42- dans le matériau ; (2) le rapport de lixiviat de NaCl et CaCl2 doit être ajusté selon les données de surveillance en temps réel dans le fonctionnement pour s'assurer que la solution après lixiviation contient 3 à 4 g/l de Ca2+, 10 à 30 g/l de Pb2+, la concentration en Cl- dans la solution de lixiviation ≥ 150 g/l ; (3) deux types de schémas pour le recyclage du zinc, c'est-à-dire a. utilisation de P204 en tant qu'agent d'extraction après le déplacement, adoption des étapes en série de saponification de l'agent d'extraction → extraction du zinc → lavage → extraction inverse → électrolyse du zinc, b. utilisation de Ca(OH)2 pour neutraliser le zinc précipité, puis passage par 4 étapes de dissolution de Zn(OH)2, extraction du zinc, extraction inverse et électrolyse du zinc.

2. Technologie de fusion de plomb hydrométallurgique de sulfate de plomb selon la revendication 1, qui est **caractérisée en ce que** : la température du lixiviat est régulée dans la plage de 18 °C à 90 °C et le pH du lixiviat est de 4 à 5 ; la solution lixiviée doit être purifiée par du plomb spongieux de sorte à éliminer les impuretés sous forme de traces de Ag, Cu et Bi dans la solution ; le zinc nécessaire pour le déplacement est un morceau de zinc métallique, une poudre de zinc, une particule de zinc, une bille de zinc et le morceau de zinc séparé de l'électrolyse est le haut de gamme, et la température de déplacement est de 18 °C à 19 °C, et la quantité réelle de déplacement de zinc est de 105 à 110 % de la quantité théorique.

3. Technologie de fusion de plomb hydrométallurgique de sulfate de plomb selon la revendication 1, qui est **caractérisée en ce que** : le premier schéma détaillé a de recyclage du zinc est tel que suit: (1) saponification de l'agent d'extraction : utilisation de Ca(OH)2 pour saponifier le P204, le P204 est mélangé avec une huile solvante 260# selon le rapport en volume de P204 : kérosène = 20 à 30 %, le P204 préparé et l'agent de saponification sont mélangés de manière uniforme pendant 1 à 2 minutes, restent pour la précipitation et la séparation de phase, la solution saponifiée est ajoutée dans le Ca(OH)2 et ensuite un recyclage est utilisé ; (2) extraction du zinc : le P204 saponifié est mélangé avec la solution déplacée, clarifié et séparation de phase, le temps de mélange est de 1 à 5 min, en utilisant une extraction à contre-courant à 3 à 5 étages, la température d'extraction est de 20 à 40 °C, le raffinat résiduel dans la phase organique après avoir été extrait est retiré par lavage à l'eau ; (3) extraction inverse du zinc : la phase organique est extraite en sens inverse par le liquide résiduaire d'électrolyse du zinc après l'extraction du zinc, le liquide résiduaire d'électrolyse du zinc contient du H2SO4 à 150 à 180 g/l, et du Zn à 40 à 50 g/l, et le rapport de la phase inverse est régulé selon la quantité de 90 à 120 g/l de Zn après l'extraction inverse, et l'extraction inverse peut être poursuivie selon un contre-courant de premier étage ou de second étage, et la phase organique contenant Zn < 0,5 g/l en tant que standard, et le temps de mélange de l'extraction inverse est de 0,5 à 10 min, et la température de l'extraction inverse est de 20 à 40 °C, la phase organique après avoir été extraite en sens inverse est renvoyée vers le procédé de saponification pour le recyclage, et l'agent d'extraction résiduaire dans l'agent d'extraction inverse est adsorbé par aéroflotation-charbon actif ; (4) électrolyse du zinc : la solution de ZnSO4 obtenue à partir de l'extraction inverse est traitée par électrolyse, et le H2SO4 recyclé est renvoyé vers l'extraction inverse du zinc pour un recyclage, et le morceau de zinc séparé est utilisé pour le procédé de déplacement de plomb, et le morceau de zinc de recyclage en excès est le produit de zinc après moulage en lingot du morceau de zinc.

4. Technologie de fusion de plomb hydrométallurgique de sulfate de plomb selon la revendication 1, qui est **caractérisée en ce que** : le second schéma détaillé b de recyclage du zinc est tel que suit: (1) neutralisation du zinc sédimentaire : utilisation de Ca(OH)2 pour neutraliser le zinc sédimentaire, et augmentation de la valeur de pH à 7 à 9 et séparation liquide-solide, et la solution après la précipitation du zinc est renvoyée vers le procédé de lixiviation de PbSO4, le sédiment Zn(OH)2 est séparé, et ensuite lavé avec de l'eau pour éliminer la liqueur mère supplémentaire ; le Zn(OH)2 peut être préparé pour produire du ZnO, et peut également être utilisé pour produire du zinc électrique selon le procédé suivant. (2) dissolution de Zn(OH)2 : utilisation d'acide sulfurique dilué pour dissoudre le Zn(OH)2 dans la rainure d'agitation, régulation du lixiviat contient 20 à 30 g/l de Zn, l'extraction du zinc est réalisée après la dissolution du zinc suivie par une filtration ; (3) extraction du zinc : utilisation de solvant kérosène 260# en tant que diluant et ensuite mélangé avec P204, préparation de la phase organique contient de 20 à 40 % de P204 en volume, et ensuite la phase organique est mélangée par agitation avec la solution de dissolution du zinc, et le rapport de la phase organique à la phase aqueuse O/A = 1/2 à 2/1, le temps d'extraction et de mélange est de 0,5 à 5 min, et la température d'extraction est de 20 à 30 °C, réalisation de l'extraction à contre-courant à 3 à 4 étages, et renvoie du zinc vers la phase organique, et le raffinat est renvoyé vers le Zn(OH)2 pour dissolution et un recyclage est utilisé ; (4) extraction inverse du zinc : identique à celle du premier schéma de recyclage du zinc ; (5) électrolyse de zinc : identique à celle du premier schéma de recyclage du zinc.
